# EUROPEAN PATENT SPECIFICATION

(11) **EP 4 379 117 B1**
(45) Date of publication and mention of the grant of the patent: **11.06.2025**
(21) Application number: 23212416.4
(22) Date of filing: 27.11.2023
(51) Int. Cl.: D06F 37/20, D06F 37/26

(54) **SUPPORT FOR FASTENING AN ELECTRIC MOTOR TO A TUB OF A HOUSEHOLD APPLIANCE, IN PARTICULAR A WASHING MACHINE**
HALTERUNG ZUR BEFESTIGUNG EINES ELEKTROMOTORS AN EINEM LAUGENBEHÄLTER EINES HAUSHALTSGERÄTS, INSBESONDERE EINER WASCHMASCHINE
SUPPORT POUR FIXER UN MOTEUR ÉLECTRIQUE À UNE CUVE D'UN APPAREIL ÉLECTROMÉNAGER, EN PARTICULIER UNE MACHINE À LAVER

(30) Priority: 29.11.2022 IT 202200024594
(43) Date of publication of application: 05.06.2024
(73) Proprietor: Askoll Holding S.r.l. a socio unico, 36031 Povolaro di Dueville (VI) (IT)
(72) Inventor: MARIONI, Elio, 36031 Dueville (VI) (IT)
(74) Representative: Botti & Ferrari S.p.A.

(56) References cited:
- EP-A1- 2 775 024
- EP-A1- 3 243 949
- WO-A2-2013/182931
- CN-A- 112 663 288
- FR-A1- 2 488 922
- KR-A- 20060 088 660
- US-A1- 2019 003 098

## Description

### Field of application

The present invention relates to a support for fastening an electric motor designed for rotatingly driving a drum of a household appliance, in particular for fastening said motor to the tub of said household appliance.

The household appliance to which the invention relates is preferably a large household appliance such as a washing machine, or similar household appliance equipped with a rotating drum driven by an electric motor.

The invention therefore finds useful application in the industrial sector of large household appliances, particularly washing machines, and related components.

### Prior art

It is well known that a washing machine comprises a tub, inside which a drum is housed, rotatingly driven by a drive belt. The belt is set in rotation by a pulley integral with the rotor of an electric motor.

The electric motor is generally fastened below the tub containing the rotating drum, in a rear position so as to align the drive pulley projecting to the rear with a driven pulley integral with the drum. To support the motor, a support is used which is coupled to the tub at four attachment points, two at the rear and two at the front, provided for the purpose. Socket connectors are provided at the attachment points of the tub, onto which corresponding eyelets, formed in the support, are inserted. Once the eyelets are engaged in the sockets, the relative position of the elements can be locked by means of a threaded rod that fits into the sockets themselves. The four attachment points stably constrain the motor to the tub, even in the presence of the vibrations that occur when using the household appliance.

Over recent decades, the size of the electric motors used in most washing machines on the market has been significantly reduced, particularly with the advent of synchronous motors.

On the other hand, the use of the four attachment sockets on the washing machine tub has been retained, both for reasons of standardisation and for reasons of stability of the support. In fact, it can be observed that the relatively high arm separating the rear and front attachments defines a constraining reaction torque that effectively counteracts the pulley tension.

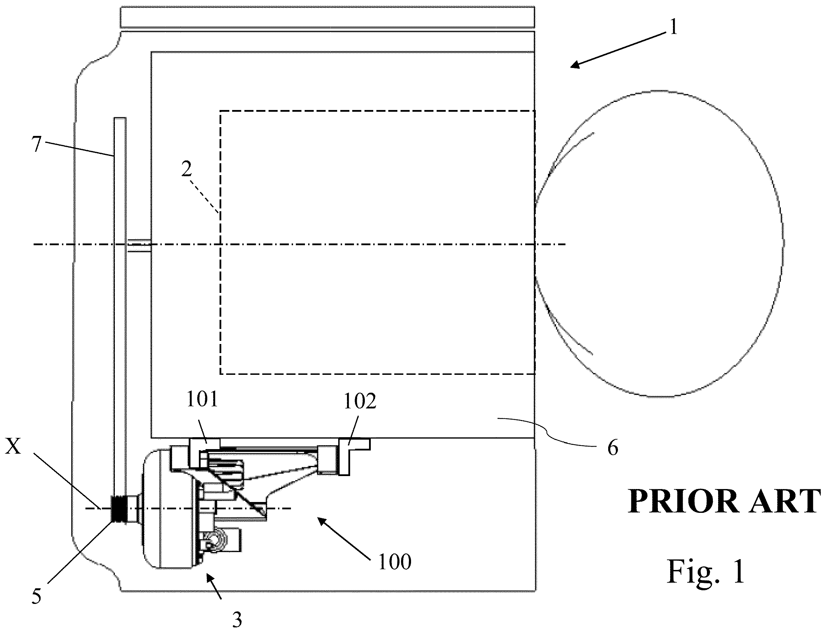

An embodiment according to the prior art, taken from the utility model filed under number EN MI20070304 U on behalf of the Applicant, is schematically illustrated in Figure 1. In this figure, a washing machine 1 is shown comprising a tub 6 inside which there is a drum 2 rotatingly driven by a belt 7 moved by a pulley 5 integral with the rotor of an electric motor 3 fastened from above to the tub 6 by means of a support 100 according to the prior art. It can be seen that the support is constrained to tub 6 by means of front 101 and rear 102 attachments, which define a relatively large attachment perimeter, occupied only in its front part by the electric motor.

The size of the attachment perimeter in the embodiment of the prior art, which, as mentioned, meets the requirements of standardisation and stability, results on the other hand in a significantly larger footprint of the component than the actual dimensions of the electric motor. Obviously, these dimensions have an impact on the logistical costs of production and distribution, requiring larger volumes for the storage and transport of the device.

As a result, there is a need to streamline the fastening elements of the motor to the washing machine, while maintaining compatibility with existing washing machine tub attachments on the one hand, and the fastening stability of traditional fastening supports on the other, particularly under critical conditions such as high vibrations due to the spin cycle.

Another purpose of the invention is to reduce the plastic or other material used for the production of such fastening elements.

A further aim is to reduce the shipping and storage costs of such these supports due to the size of standard fastening supports.

Supports according to the prior art are disclosed in documents EP 2 775 024 A1, FR 2 488 922 A1, WO 2013/182931 A2, US 2019/003098 A1, US 2017/137984 A1 and EP 3 243 949 A1.

The technical problem underlying the present invention is, thus, that of providing a fastening support for an electric motor with a significantly reduced volume, without impairing the compatibility and fastening stability characteristics guaranteed by supports according to the prior art.

### Summary of the invention

The idea underpinning the present invention is to provide an abutment element integral with the support that abuts against a rear surface of the tub, exerting a constraining action to counteract the possible rotation of the support around the hinge defined by its front attachment points.

The abutment element thus performs the structural function delegated in the prior art to the rear attachment points, which are no longer necessary to guarantee the stability of the assembly. The latter can therefore be conveniently eliminated, allowing a considerable reduction of the dimensions in the motor's axial direction.

The aforementioned technical problem is therefore solved by a support for fastening an electric motor for rotatingly driving a drum of said appliance to a tub inside a household appliance, said support comprising:
a main body designed to support the electric motor in a fixed position with respect to the tub, with a pulley of said electric motor protruding at the rear with respect to said main body;
two attachment elements, designed for the coupling with respective attachment points of the tub in an assembled configuration, said attachment elements being arranged above and at the rear with respect to said main body;
at least one abutment element protruding above and in a rear position with respect to the main body, said abutment element being designed to be arranged, in an assembled configuration, abutting against a rear surface of the drum.

The abutment is not inserted in a dedicated seat of the tub, so that the support can be employed with existing washing machines without modifying the design of their tub.

Preferably, said abutment element raises substantially above with respect to a horizontal plane tangent to an upper surface of said attachment elements. Therefore, the abutment element can abut against the ribbed portion of the tub which is usually substantially above the attachment points.

As mentioned above, the solution according to the present invention allows only the front attachment elements to be used for fastening. Preferably, therefore, the support comprises two and only two attachment elements.

In a familiar manner, the attachment elements take the form of eyelets designed to accommodate respective connectors integral to the tub. The connectors are preferably cylindrical sockets to which the eyelets are constrained by means of threaded rods.

Preferably, the abutment element is arranged at a distance from both attachment elements, i.e. it neither overlaps with them nor is located in close proximity to them.

In particular, in a preferred solution, the abutment element is elevated to a position substantially intermediate with respect to that of the two abutment elements.

Preferably, the abutment element is in fact positioned on the centreline of the support, while the two attachment points are traditionally lateral thereto.

Still preferably, with a view to keeping the device as compact as possible, the abutment element is essentially coplanar with respect to the two attachment elements. In particular, all three elements can be provided on the rear surface of the support, which is basically aligned with the rear surface of the washing machine tub.

Said abutment element comprises an appendage which is radial with respect to the main body, shaped on the upper part in order to adapt to a rear surface of the tub.

Still preferably, the aforementioned radial appendage rises to a higher level than the attachment elements.

Preferably, the appendage is shaped at the top like an L facing the forward direction of the support. In particular, the opening of the L faces forward and upwards with respect to the support. Thanks to this conformation, the appendage is able to abut firmly against a lower edge of the washing machine tub.

The aforementioned appendage comprises, at least in its upper portion, two parallel ribs designed to house therebetween a ribbing feature of the rear wall of the tub. This not only adapts to the ribbed shape of the rear surface of the washing machine tub, but also allows for precise positioning of the support in a central position in relation to the washing machine tub.

On the inner surface of the two parallel ribs, friction means can advantageously be applied, e.g. elastomer shims, which work in compression on the opposing sides of the tub rib, in order to provide a further frictional blockage.

Preferably, this appendage is made integral with the main body. In particular, the appendage - as well as the side wings bearing the connecting eyelets - can be made together with the main body by means of a single molding operation, preferably from thermally conductive plastic material.

In a preferred embodiment, the electric motor is integrated into the support. In particular, the electric motor can be enclosed in a casing defined by the main body.

As is well known, the electric motor comprises a rotor which can be rotated with the pulley projecting at the rear and a stator integral with the main body. The electric motor may be of the permanent magnet synchronous type and may have an internal rotor.

The casing is preferably made of plastic and co-molded above the stator. Alternatively, the casing can be made in a traditional manner, e.g., with metal shells, preferably aluminium.

Preferably, the aforesaid casing comprises two circular panels at the front and rear joined by a side edge, extending along the side perimeter of the casing.

The casing preferably comprises, on its rear panel, a hub extending outwards from which the pulley of the electric motor emerges.

Preferably, the casing comprises a rear cover that is removably attached to the rest of the main body, e.g., by means of fastening screws.

Advantageously, the cover can allow a maintenance person to access the shaft/rotor block, being able to pull it out if necessary.

Also advantageously, the cover can support one of the bearings supporting the rotor shaft, the other being inserted into the rear panel of the casing.

Preferably, the fastening support can dissipate heat, acting as a heat sink.

The support is part of a tub/motor assembly comprising a tub of a household appliance comprising at least two attachment points and a rear surface; an electrical motor; and the support itself; wherein the two attachment elements are coupled to the attachment points at the bottom of the tub and the abutment element abuts against a rear surface of the tub, above said attachment points, without being inserted in a dedicated seat of the tub; wherein the main body of the support supports the electrical motor in a fixed position with respect to the tub, a pulley of said electric motor protruding at the rear with respect to said main body.

The characteristics and advantages of the present invention will result from the following description with reference to the accompanying drawings provided by way of indicative and non-limiting example.

### Brief description of the drawings

In the drawings:
- figure 1 represents a schematic view of a washing machine with a motor fixed by means of a support according to the prior art;
- figure 2 represents a perspective view from a rear viewpoint of a support for an electric motor according to the present invention;
- figure 3 represents a perspective view from a front viewpoint of the support in figure 2;
- figure 4 represents a perspective view from a rear viewpoint of the support in figure 2 mounted on a washing machine tub;

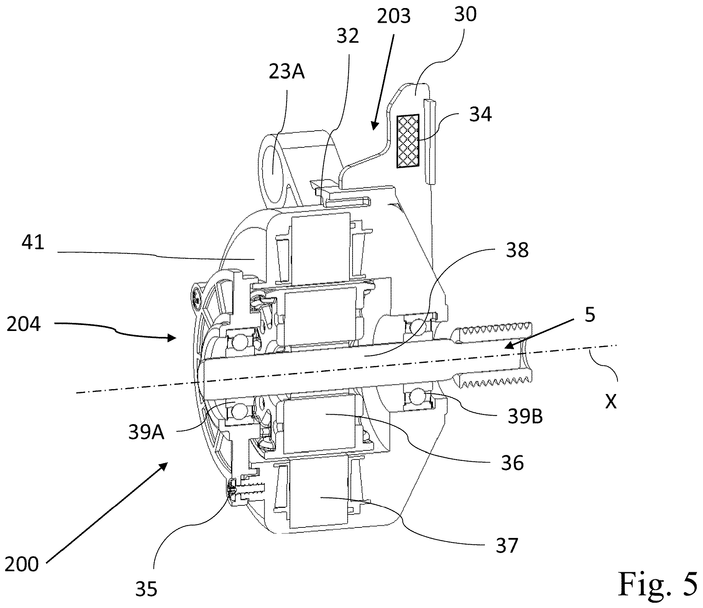

- figure 5 represents a perspective view sectioned according to a centreline plane of the support in figure 2.

### Detailed description

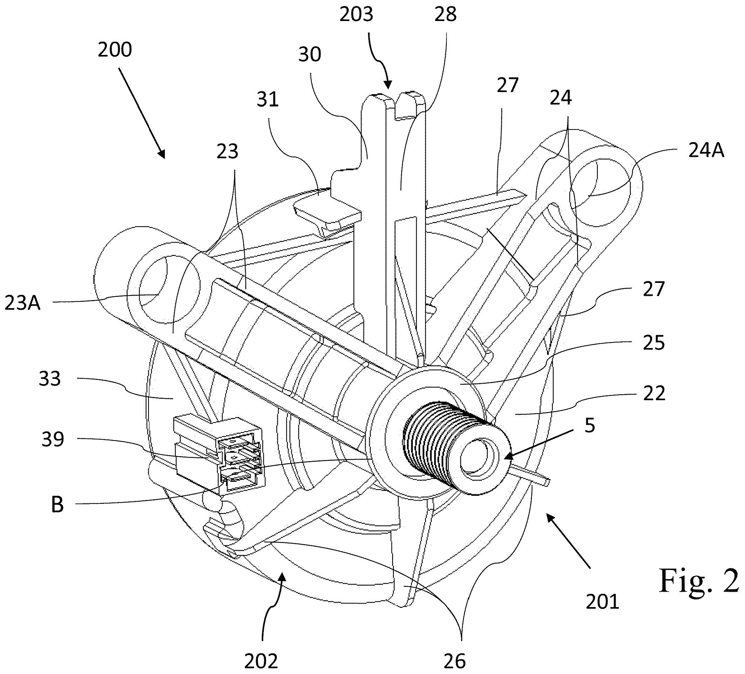

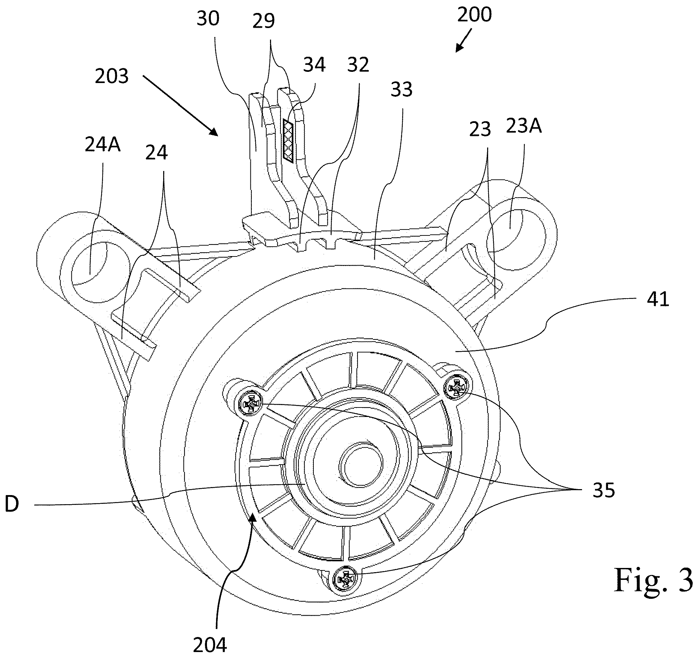

With reference to Figures 2-4, 200 indicates overall a support according to an embodiment of the present invention.

The support 200 is illustrated in the figures in its normal use configuration. The positions and orientations, relative and absolute, of the various elements that make up the device, defined by terms such as upper and lower, top and bottom, horizontal and vertical or other equivalent terms, must always be interpreted with reference to that configuration. Other terms such as front or front and rear, and their equivalents, should be interpreted considering the normal use configuration of the washing machine, which has the loading door at the front and the belt drive connecting the electric motor and drum at the rear.

The support 200 is intended to perform a support function for the electric motor 3. In turn, the support 200 is supported by the tub 6, which is equipped with traditional type fastening means able to support a motor.

In the preferred embodiment described herein, the electric motor 3 is integrated into the support 200, i.e. the two form a single entity that can be individually handled.

The electric motor 3 is preferably of the synchronous type, and comprises an inner rotor 36 with permanent magnets and an outer stator 37 with windings, separated in a known manner by an air gap. The rotor 36 comprises a central hub splined to a shaft 38 rotatable about an axis of rotation X. The shaft 38 is supported by two bearings 39A, 39B and has a free end on which a pulley 5 is splined to drive the belt that moves the washing machine drum.

The support 200 comprises a main body 201, which constitutes in particular a thermally conductive plastic casing 202, co-molded directly onto the stator 37 of the electric motor 3, so as to accommodate it inside.

The casing 202 therefore has a cylindrical shape, defined by a rear circular panel 22 and a circular front panel 41, connected by a side edge 33.

The rear circular panel 22 has a central portion B from which a projecting hub 25 emerges externally, from which in turn the end portion of the shaft 38 emerges equipped with a pulley 5. Two pairs of ribs 23 and 24 radially project from the projecting hub 25, which are connected by two diverging arms radially projecting from the rear circular panel 22. Two full braces 27 are connected to each other on either side of each of the diverging arms. At the two ends of these diverging arms as many attachment elements 23A, 24A are formed, which in this case take the form of eyelets for housing the respective socket connectors 23B, 24B on the rear surface of the washing machine drum. In the socket connectors 23B, 24B, screws are introduced in a known way.

Second reinforcing ribs 26 radiate out from the projecting hub 25 along the lower portion of the rear circular panel 22.

The casing 202 also features a terminal block 39 on the outside, projecting from the side edge 33, which allows power and control cables to be connected.

From the projecting hub 25 an abutment element 203 extends vertically upwards, having a fork structure, which defines an upper appendage 30 projecting from the main body 201 of the support 200.

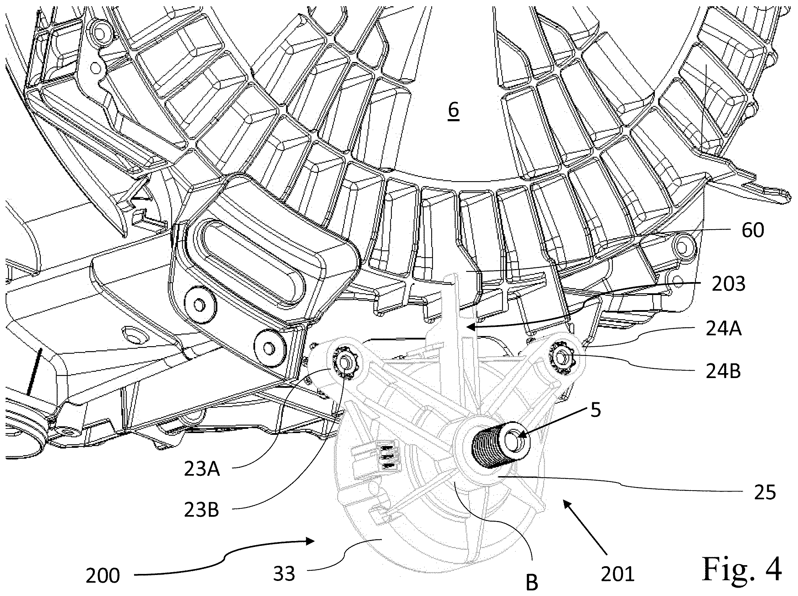

The abutment element 203 consists of two parallel ribs 29 that depart vertically from the projecting hub 25. These ribs 29 are connected at the rear by a bridge 28, but remain separated in their front portion. The two ribs 29 define a fork with an L-shaped side profile, which abuts against the tub 6 of the washing machine 1, as can be seen in figure 4. In particular, a rear rib 60 of the tub 6 is introduced between the two ribs 29. The base of the L-shaped profile connects with a cylindrical base 31, raised from the side edge 33 and separated from it by two feet 32.

Advantageously, in the embodiment depicted here, two elastomer shims 34 are applied, e.g. by adhesive, to the two inner surfaces of the ribs 29, which provide a further frictional blockage on both sides of the rib 60.

This abutment element 203, as discussed earlier in the summary of the invention, fulfils the purpose of ensuring the stability of the device.

At the rear, the casing 202 is formed by a circular panel 41, which centrally has an opening closed by a lid 204. The stator 37 can be positioned and removed through the opening. The cover 204, which houses one of the bearings 39A supporting the shaft 38, is fastened to the casing 202 by means of fastening screws 35.

An advantage of the present invention derives from its compact and space-saving design, due to its small axial dimensions and quasi-planar extension, which greatly facilitates storage and transport operations.

Another advantage of the present invention lies in the structural solidity of the attachment defined by the support on the washing machine tub.

A further advantage lies in the limited production and assembly cost of the support, thanks to the monolithic structure that integrates the electric motor within it.

Another advantage is due to the use of thermoplastic overmolding, which allows optimal heat dissipation.

It goes without saying that a person skilled in the art may make numerous modifications and variations to the above-described support in order to meet specific and contingent requirements, all of which are within the scope of protection of the present invention as defined by the following claims.

## Claims

1. Support (200) for fastening an electric motor (3) to a tub (6) inside a household appliance for rotatingly driving a drum (2) of said household appliance, said support (200) comprising:
a main body (201) designed to support the electrical motor (3) in a fixed position with respect to the tub (6), a pulley (5) of said electric motor (3) protruding at the rear with respect to said main body (201);
two attachment elements (23A, 24A), designed for the coupling with respective attachment points of the tub (6) in an assembled configuration, said attachment elements (23A, 24A) being arranged above and at the rear with respect to said main body (201)
wherein the terms front and rear, above and below should be interpreted considering the support (200) mounted on a household appliance in its normal use configuration, the household appliance having a loading door at the front and a belt drive connecting the electric motor (3) and drum (2) at the rear;
said support (200) further comprising:
at least one abutment element (203) protruding above and in a rear position with respect to the main body (201), said abutment element (203) being designed to be arranged, in an assembled configuration, abutting against a rear surface of the tub (6) without being inserted in a dedicated seat of the tub (6);
wherein said abutment element (203) comprises an appendix (30) which is radial with respect to the main body (201) and shaped on the upper part in order to adapt to a rear surface of the tub (6);
**characterized in that** said appendix (30) comprises, at least in its upper portion, two parallel ribs (29) designed to house therebetween a ribbing feature (60) of the rear wall of the tub (6).

2. Support (200) according to claim 1, wherein said abutment element (203) raises substantially above with respect to a horizontal plane tangent to an upper surface of said attachment elements (23A, 24A).

3. Support (200) according to one of the previous claims, comprising two and only two attachment elements.

4. Support (200) according to one of the previous claims, wherein the attachment elements (23A, 24A) are eyelets designed to house respective connectors (23B, 24B) which are solidly attached to the tub (6).

5. Support (200) according to one of the previous claims, wherein said abutment element (203) is arranged in a spaced relationship with respect to both attachment elements (23A, 24A).

6. Support (200) according to one of the previous claims, wherein said abutment element (203) rises in a substantially intermediate position with respect to the position of the two attachment elements (23A, 24A).

7. Support (200) according to one of the previous claims, wherein said abutment element (203) is substantially coplanar with respect to the two attachment elements (23A, 24A).

8. Support (200) according to one of the previous claims, wherein said appendix (30) is shaped on the upper part as an L, with the opening facing forward and upwards with respect to the support (200).

9. Support (200) according to one of the previous claims, wherein said ribs (29) provide friction means, for example elastomeric shims (34), on their surface in contact with the ribbing feature (60) in order to provide a further frictional blockage between support (200) and tub (6).

10. Support (200) according to one of the previous claims, wherein said appendix (30) is made integral with the main body (201).

11. Support (200) according to one of the previous claims, further comprising the electric motor (3) integrated therewith, said electric motor being enclosed by a casing (202) defined by the main body (201).

12. Support (200) according to claim 11, wherein said electric motor comprises a rotor (36) which can be rotated with the pulley (5) and a stator (37) which is solidly attached to the main body (201), said casing being made of a plastic material co-molded above the stator (37).

13. Tub/motor assembly comprising a tub (6) of a household appliance comprising at least two attachment points and a rear surface; an electrical motor (3); and a support (200) according to one of the previous claims; wherein the two attachment elements (23A, 24A) are coupled to the attachment points at the bottom of the tub and the abutment element (203) abuts against a rear surface of the tub (6), above said attachment points, without being inserted in a dedicated seat of the tub (6); wherein the main body (201) of the support (200) supports the electrical motor (3) in a fixed position with respect to the tub (6), a pulley (5) of said electric motor (3) protruding at the rear with respect to said main body (201).

## Patentansprüche

1. Träger (200) zum Befestigen eines Elektromotors (3) an einem Bottich (6) in einem Haushaltsgerät zum rotatorischen Antreiben einer Trommel (2) des Haushaltsgeräts, wobei der Träger (200) Folgendes umfasst:
einen Hauptkörper (201), der ausgelegt ist, den Elektromotor (3) in einer festen Position in Bezug auf den Bottich (6) zu tragen, wobei eine Rolle (5) des Elektromotors (3) an der Rückseite in Bezug auf den Hauptkörper (201) vorsteht;
zwei Befestigungselemente (23A, 24A), die zum Koppeln mit entsprechenden Befestigungspunkten des Bottichs (6) in einer zusammengebauten Konfiguration ausgelegt sind, wobei die Befestigungselemente (23A, 24A) in Bezug auf den Hauptkörper (201) oben und an der Rückseite angeordnet sind,
wobei die Begriffe vorn und hinten, oben und unten unter der Berücksichtigung interpretiert werden, dass der Träger (200) an einem Haushaltsgerät in seiner normalen Gebrauchskonfiguration montiert ist, wobei das Haushaltsgerät eine Beladungstür an der Vorderseite und einen Riemenantrieb, der den Elektromotor (3) und die Trommel (2) verbindet, an der Rückseite aufweist;
wobei der Träger (200) ferner Folgendes umfasst:
wenigstens ein Anschlagelement (203), das in Bezug auf den Hauptkörper (201) nach oben und in einer rückwärtigen Position vorsteht, wobei das Anschlagelement (203) so ausgelegt ist, dass es so angeordnet ist, dass es in einer zusammengebauten Konfiguration an einer hinteren Oberfläche des Bottichs (6) anliegt, wobei es nicht in eine zugewiesene Aufnahme des Bottichs (6) eingesetzt ist;
wobei das Anschlagelement (203) einen Fortsatz (30) umfasst, der in Bezug auf den Hauptkörper (201) radial verläuft und am oberen Teil so geformt ist, dass er zu einer hinteren Oberfläche des Bottichs (6) passt;
**dadurch gekennzeichnet, dass** der Fortsatz (30) wenigstens in seinem oberen Abschnitt zwei parallele Rippen (29) aufweist, die so ausgelegt sind, dass sie zwischen sich ein Riffelelement (60) der Rückwand des Bottichs (6) aufnehmen.

2. Träger (200) nach Anspruch 1, wobei sich das Anschlagelement (203) in Bezug auf eine horizontale Ebene tangential zu einer oberen Oberfläche der Befestigungselemente (23A, 24A) im Wesentlichen darüber erhebt.

3. Träger (200) nach einem der vorhergehenden Ansprüche, der zwei und nur zwei Befestigungselemente umfasst.

4. Träger (200) nach einem der vorhergehenden Ansprüche, wobei die Befestigungselemente (23A, 24A) Ösen sind, die so ausgelegt sind, dass sie entsprechende Verbindungselemente (23B, 24B), die am Bottich (6) fest befestigt sind, aufnehmen.

5. Träger (200) nach einem der vorhergehenden Ansprüche, wobei das Anschlagelement (203) in Bezug auf beide Befestigungselemente (23A, 24A) in einem Abstand angeordnet ist.

6. Träger (200) nach einem der vorhergehenden Ansprüche, wobei sich das Anschlagelement (203) in Bezug auf die Position der zwei Befestigungselemente (23A, 24A) an einer im Wesentlichen dazwischenliegenden Position erhebt.

7. Träger (200) nach einem der vorhergehenden Ansprüche, wobei das Anschlagelement (203) in Bezug auf die zwei Befestigungselemente (23A, 24A) im Wesentlichen koplanar ist.

8. Träger (200) nach einem der vorhergehenden Ansprüche, wobei der Fortsatz (30) im oberen Teil als ein L geformt ist, wobei die Öffnung in Bezug auf den Träger (200) nach vorn und nach oben zeigt.

9. Träger (200) nach einem der vorhergehenden Ansprüche, wobei die Rippen (29) Reibungsmittel, zum Beispiel elastomere Beilegscheiben (34) an ihren Oberflächen in Kontakt mit dem Riffelelement (60) bereitstellen, um eine weitere Blockade mittels Reibung zwischen dem Träger (200) und dem Bottich (6) bereitzustellen.

10. Träger (200) nach einem der vorhergehenden Ansprüche, wobei der Fortsatz (30) mit dem Hauptkörper (201) einteilig ausgebildet ist.

11. Träger (200) nach einem der vorhergehenden Ansprüche, der ferner den einteilig mit ihm ausgebildeten Elektromotor (3) umfasst, wobei der Elektromotor von einem Gehäuse (202) umschlossen ist, das durch den Hauptkörper (201) definiert ist.

12. Träger (200) nach Anspruch 11, wobei der Elektromotor einen Rotor (36), der mit der Rolle (5) gedreht werden kann, und einen Stator (37), der am Hauptkörper (201) fest befestigt ist, umfasst, wobei das Gehäuse aus einem Kunststoffmaterial hergestellt ist, das über dem Stator (37) mittels Umspritzen gebildet ist.

13. Bottich/Motor-Anordnung, die einen Bottich (6) eines Haushaltsgeräts umfasst, der Folgendes umfasst: wenigstens zwei Befestigungspunkte und eine hintere Oberfläche; einen Elektromotor (3); und einen Träger (200) nach einem der vorhergehenden Ansprüche; wobei die zwei Befestigungselemente (23A, 24A) am Boden des Bottichs mit den Befestigungspunkten gekoppelt sind und das Anschlagelement (203) an einer hinteren Oberfläche des Bottichs (6) über den Befestigungspunkten anliegt, wobei es nicht in eine zugewiesene Aufnahme des Bottichs (6) eingesetzt ist; wobei der Hauptkörper (201) des Trägers (200) den Elektromotor (3) in einer festen Position in Bezug auf den Bottich (6) trägt, wobei eine Rolle (5) des Elektromotors (3) an der Rückseite in Bezug auf den Hauptkörper (201) vorsteht.

## Revendications

1. Support (200) pour la fixation d'un moteur électrique (3) à une cuve (6) à l'intérieur d'un appareil électroménager pour entraîner en rotation un tambour (2) dudit appareil électroménager, ledit support (200) comprenant:
un corps principal (201) conçu pour supporter le moteur électrique (3) en position fixe par rapport à la cuve (6), une poulie (5) dudit moteur électrique (3) faisant saillie à l'arrière par rapport audit corps principal (201);
deux éléments de fixation (23A, 24A), conçus pour l'accouplement avec des points de fixation respectifs de la cuve (6) en configuration assemblée, lesdits éléments de fixation (23A, 24A) étant disposés au-dessus et à l'arrière par rapport audit corps principal (201)
dans lequel les termes avant et arrière, au-dessus et au-dessous doivent être interprétés en considérant le support (200) monté sur un appareil électroménager dans sa configuration d'utilisation normale, l'appareil électroménager ayant une porte de chargement à l'avant et un entraînement par courroie qui connecte le moteur électrique (3) et le tambour (2) à l'arrière;
ledit support (200) comprenant en outre:
au moins un élément de butée (203) faisant saillie au-dessus et en position arrière par rapport au corps principal (201), ledit élément de butée (203) étant conçu pour être disposé, en configuration assemblée, en butée contre une surface arrière de la cuve (6) sans être inséré dans un siège dédié de la cuve (6);
dans lequel ledit élément de butée (203) comprend un appendice (30) qui est radial par rapport au corps principal (201) et conformé sur la partie supérieure afin de s'adapter à une surface arrière de la cuve (6);
**caractérisé en ce que** ledit appendice (30) comprend, au moins dans sa portion supérieure, deux nervures parallèles (29) conçues pour loger entre elles un élément de nervure (60) de la paroi arrière de la cuve (6).

2. Support (200) selon la revendication 1, dans lequel ledit élément de butée (203) s'élève essentiellement au-dessus par rapport à un plan horizontal tangent à une surface supérieure desdits éléments de fixation (23A, 24A).

3. Support (200) selon l'une des revendications précédentes, comprenant deux et seulement deux éléments de fixation.

4. Support (200) selon l'une des revendications précédentes, dans lequel les éléments de fixation (23A, 24A) sont des œillets conçus pour loger des connecteurs (23B, 24B) respectifs qui sont solidement fixés à la cuve (6).

5. Support (200) selon l'une des revendications précédentes, dans lequel ledit élément de butée (203) est disposé en relation espacée par rapport aux deux éléments de fixation (23A, 24A).

6. Support (200) selon l'une des revendications précédentes, dans lequel ledit élément de butée (203) s'élève en position essentiellement médiane par rapport à la position des deux éléments de fixation (23A, 24A).

7. Support (200) selon l'une des revendications précédentes, dans lequel ledit élément de butée (203) est essentiellement coplanaire par rapport aux deux éléments de fixation (23A, 24A).

8. Support (200) selon l'une des revendications précédentes, dans lequel ledit appendice (30) est conformé en L sur la partie supérieure, avec l'ouverture tournée vers l'avant et vers le haut par rapport au support (200).

9. Support (200) selon l'une des revendications précédentes, dans lequel lesdites nervures (29) fournissent des moyens de frottement, par exemple des cales en élastomère (34), sur leur surface en contact avec l'élément de nervure (60) afin de fournir un blocage supplémentaire par frottement entre le support (200) et la cuve (6).

10. Support (200) selon l'une des revendications précédentes, dans lequel ledit appendice (30) est réalisé en une seule pièce avec le corps principal (201).

11. Support (200) selon l'une des revendications précédentes, comprenant en outre le moteur électrique (3) intégré avec celui-ci, ledit moteur électrique étant enfermé par un carter (202) défini par le corps principal (201).

12. Support (200) selon la revendication 11, dans lequel ledit moteur électrique comprend un rotor (36) qui peut être mis en rotation avec la poulie (5) et un stator (37) qui est fixé solidement au corps principal (201), ledit carter étant réalisé en une matière plastique co-moulée au-dessus du stator (37).

13. Ensemble cuve/moteur comprenant une cuve (6) d'un appareil électroménager comprenant au moins deux points de fixation et une surface arrière; un moteur électrique (3); et un support (200) selon l'une des revendications précédentes; dans lequel les deux éléments de fixation (23A, 24A) sont accouplés aux points de fixation au fond de la cuve et l'élément de butée (203) vient en butée contre une surface arrière de la cuve (6), au-dessus desdits points de fixation, sans être inséré dans un siège dédié de la cuve (6); dans lequel le corps principal (201) du support (200) supporte le moteur électrique (3) en position fixe par rapport à la cuve (6), une poulie (5) dudit moteur électrique (3) faisant saillie à l'arrière par rapport audit corps principal (201).
